Europäisches Patentamt

European Patent Office

Office européen des brevets

(11) Veröffentlichungsnummer: **0 066 119**
**B1**

(12) **EUROPÄISCHE PATENTSCHRIFT**

(45) Veröffentlichungstag der Patentschrift:
**22.04.87**

(51) Int. Cl.⁴: **B 67 C 7/00,** B 65 G 43/08

(21) Anmeldenummer: **82104025.0**

(22) Anmeldetag: **08.05.82**

(54) Verfahren zur Ermittlung des Befüllungsgrades von Pufferstrecken zwischen Gefässbehandlungsanlagen und zur kontinuierlichen Regelung der Durchsatzleistung in derartigen Behandlungsanlagen mit mehreren in Durchlaufrichtung der Gefässe oder Flaschen hintereinander und/oder parallel geschalteten Einzelmaschinen.

(30) Priorität: **20.05.81 DE 3119990**
**24.06.81 DE 3124882**

(43) Veröffentlichungstag der Anmeldung:
**08.12.82 Patentblatt 82/49**

(45) Bekanntmachung des Hinweises auf die Patenterteilung:
**22.04.87 Patentblatt 87/17**

(84) Benannte Vertragsstaaten:
**BE DE FR IT NL SE**

(56) Entgegenhaltungen:
**DE - A - 2 122 152**
**DE - A - 2 233 791**
**DE - A - 2 234 991**
**DE - A - 2 342 252**
**DE - A - 2 505 622**
**DE - B - 2 747 598**

(73) Patentinhaber: **Holstein & Kappert GmbH,**
**Juchostrasse 20, D-4600 Dortmund 1 (DE)**

(72) Erfinder: **Bargelé, Norbert, Dr., Flachskamp 47,**
**D-4670 Lünen-Alstedde (DE)**
Erfinder: **Kautz, Ralf-Dieter, Dipl.-Ing.,**
**Heinrich-König-Strasse 4, D-4630 Bochum (DE)**

**Beschreibung**

Die Erfindung bezieht sich auf eine Vorrichtung zur Ermittlung des Befüllungsgrades von Pufferstrecken zwischen Gefässbehandlungsmaschinen zum Zwecke der Regelung der Durchsatzleistung von Maschinen und Transporteuren gemäss Oberbegriff des Hauptanspruches.

Zur Ermittlung des Befüllungsgrades von Pufferstrecken zwischen Gefässbehandlungsanlagen zum Zwecke der Regelung der Durchsatzleistung derartiger Maschinen in Gefässbehandlungsanlagen ist es bekannt, den auf den Zwischenförderern anstehenden Staudruck mittels eines Staudruckdetektors zu ermitteln und den staulängenproportionalen Messausgang, der eine Komponente der Eingangsgrösse des dieser Maschine zugeordneten Reglers bildet, als Messgrösse zur Regelung der Durchsatzleistung der zugeordneten Maschine heranzuziehen.

Bei diesem Regelverfahren wird vorausgesetzt, dass auf dem betreffenden Transporteur ein bestimmter Staudruck der Flaschen bzw. Gefässe vorhanden ist. Erst dieser Staudruck kann die erforderliche Regelbemessungsgrösse liefern. Durch den zwingend erforderlichen Staudruck innerhalb der Transporteure treten erhebliche Nachteile auf, die beispielsweise in einer Beschädigung der aneinanderreibenden Gefässe bzw. deren Ausstattungen einerseits zu sehen sind. Andererseits verursacht der Staudruck insbesondere im Bereich der Vereinzelung erhebliche Impulsgeräusche, Klemmungen und dgl., so dass ein einwandfreier Transportfluss nicht gewährleistet ist. Darüber hinaus bilden die zur Förderung der Gefässe herangezogenen Transporteure häufig unterschiedliche Reibungswerte, die beispielsweise durch überhöhte oder verminderte Bandschmierung verursacht sein können, wodurch deren Einflüsse auf die Regelgrösse nicht zu vernachlässigen sind. Insofern ist bei dem bekannten Verfahren eine Verfälschung der ermittelten Regelgrössen nicht zu vermeiden. Bei dem bekannten Verfahren wird der von jedem Staudruckdetektor der auf die erste Maschine folgenden Maschine gewonnene Messausgang einem Vergleicher zugeführt und darin mit einem Vergleichssignal verglichen, wobei, wenn der Betrag des Messausganges grösser als der des Vergleichssignals ist, am Ausgang des Vergleichers eine Regelgrösse auftritt, die proportional zu dem das Vergleichssignal übersteigenden Wert des Messausganges ist. Diese Regelgrösse bildet in einer Additionsstufe vor dem Eingang des Reglers der davorliegenden Maschine zusammen mit dem Messausgang des Staudruckdetektors der in der Kette der vorliegenden Maschine eine stetige Regeldifferenz, die dem dieser Maschine zugeordneten Regler für die Bildung des Regelausgangs zugeführt wird. Bei einem solchen bekannten Regelverfahren wird vorausgesetzt, dass auf dem betreffenden Transporteur, wie bereits dargelegt, ein bestimmter Staudruck der Gefässe vorhanden ist.

Als weiterer Nachteil dieser bekannten Regelung ist anzusehen, dass es nur die Beeinflussung einer Behandlungsinsel, bestehend aus einer Behandlungsstation sowie der vor- und dahinterliegenden Puffer, ermöglicht. Eine Beeinflussung der Maschine einer Anlage ist nur über die verbindenden Puffer möglich; eine direkte Beeinflussung von Maschinen untereinander ist ebenfalls nicht möglich.

Aus der DE-A 2 505 622 ist eine Förderbahn zwischen zwei Stationen zum Behandeln von Flaschen bekanntgeworden, die als Pufferstrecke dient. Die Förderbahn weist Organe zum Messen der Anzahl von Flaschen auf der Pufferstrecke auf. Dabei dienen die Messorgane zur Regelung der Fördergeschwindigkeit dieser Pufferstrecke. Die Förderbahn arbeitet mit einer solchen Geschwindigkeit, welche gerade ausreicht, den gewünschten Druck gegen den Zuleitungsförderer der nachgeschalteten Maschine zu verwirklichen. Mit dieser Vorrichtung wird eine reine Differenzzählung vorgenommen, mit welcher lediglich die Pufferstrecke beeinflusst ist, um den Staubereich am Ende der Pufferstrecke aufrechtzuerhalten. Es kann demzufolge keine kontinuierliche Flussbildung des gesamten Flaschenpaketes erzielt werden.

Ausgehend von dem bekannten Verfahren und der Vorrichtung hat sich die Erfindung die Aufgabe gestellt, eine drucklose Ermittlung des Befüllungsgrades bzw. des Gefässvorrates auf dem betreffenden Transportabschnitt bzw. der zugeordneten Pufferstrecke zu schaffen, wobei eine die Insel überschreitende Regelung einer gesamten Anlage gegeben sein soll und maschinenspezifische Kenngrössen anderer Maschinen in der Anlage Berücksichtigung finden sollen. Diese Aufgabe wird nach der Erfindung bei einer Vorrichtung der eingangs genannten Art gemäss den in den Patentansprüchen 1–6 beanspruchten Merkmalen gelöst.

Mit der erfindungsgemäss vorgeschlagenen Vorrichtung ist eine berührungslose Ermittlung des Gefässvorrates auf den betreffenden Pufferstrecken gewährleistet. Der Befüllungsgrad der Pufferstrecken wird anhand der Durchsatzleistung der jeweiligen Behandlungsmaschinen ermittelt. Dies erfolgt beispielsweise mit Hilfe eines maschinenzugeordneten Tachogenerators oder einer Taktzeiterfassung. In gleicher Weise kann auch die Transportgeschwindigkeit der Transporteure ermittelt werden. Die sich auf diese Weise staudrucklos ergebenden Kenngrössen dienen der Ermittlung der aktuellen Positionen einzelner und/ oder mehrerer Gefässe oder Flaschen im Bereich der Pufferstrecken sowie der Ermittlung der Position des sich ergebenden Pulkendes.

Die rechnerische Ermittlung wird durch Sensoren im Bereich der Pufferstrecke kontrolliert und korrigiert. Auf diese Weise werden vorteilhaft die noch möglichen Ungenauigkeiten infolge fehlender und/oder nicht bereitgestellter Gefässe unmittelbar festgestellt und korrigiert, so dass ständig der aktuelle Gefässvorrat der beobachteten Abschnitte und/oder der Gesamtanlage zur Verfügung steht. Darüber hinaus werden die Sensorenimpulse zur Veränderung und Optimierung des Gefässverfolgungsverfahrens herangezogen, was den Vorteil hat, dass die Häufigkeit der vorgeschilderten Korrekturen minimiert wird.

Im Gegensatz zu den Nachteilen des eingangs geschilderten bekannten Verfahrens der parziellen Beeinflussung einer Behandlungsinsel ist mit der vorliegenden Erfindung dementgegen sichergestellt, dass auch Abweichungen von dem idealen Abgabeverhalten bzw. der betreffenden Durchsatzleistung der auseinanderliegenden, also nicht unmittelbar vor- oder hintereinander geschalteten Maschinen, unmittelbar in die Regelung eingreifen. Überdies können sich bei Einsatz des erfindungsgemässen Verfahrens bei störungsfreiem Betrieb die Durchsatzleistungen der in der Anlage gruppierten Maschinen an die Durchsatzleistung einer Leitmaschine anpassen. Eine solche Leitmaschine kann beliebig im Rahmen einer Gesamtanlage gewählt und gegebenenfalls auch automatisch anhand der Betriebsbedingungen bestimmt werden.

Als Leitmaschine wird dabei zweckmässigerweise eine Maschine gewählt, die aufgrund ihrer verfahrenstechnischen Kriterien und Eigenschaften eine Leitfunktion innerhalb der Anlage ausübt, wie dies beispielsweise bei einer Füllmaschine oder einem Pasteur innerhalb einer Getränkeabfüllanlage gegeben ist.

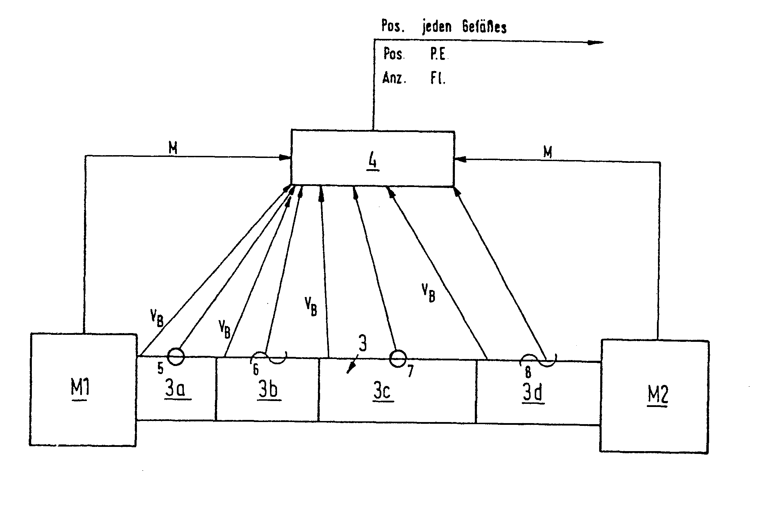

Im nachfolgenden wird die Erfindung anhand eines in der Zeichnung dargestellten Ausführungsbeispiels näher erläutert:

Das Ausführungsbeispiel bezieht sich auf eine Flaschenbehandlungsanlage, bestehend aus mehreren Behandlungsmaschinen M1 und M2, die durch Transportbänder 3 miteinander verbunden sind. Das Ausführungsbeispiel beschränkt sich auf die Behandlung von Flaschen und Dosen in der Getränkeindustrie. Unabhängig davon ist die Erfindung jedoch auch bei allen anderen Gefäss- und Verpackungsbehandlungsanlagen bzw. entsprechenden Transportproblemen einsetzbar.

Der Befüllungsgrad der Transportbänder 3, die als Pufferstrecke für die jeweils nächstfolgende Maschine M2 dienen, wird anhand der Durchsatzleistung der Maschinen M1 und M2 sowie der Transportgeschwindigkeiten der Pufferstrecke bzw. der einzelnen Transportabschnitte 3a bis 3d ermittelt. Dieses kann beispielsweise mittels Tachogeneratoren und/oder Taktzeiterfasser erfolgen. Die sich daraus ableitenden Kenngrössen werden einem Prozessrechner vermittelt. Gleichzeitig werden dem Prozessrechner 4 weitere Informationen mittels im Bereich der Transportbänder 3 bzw. deren Abschnitte 3a bis 3d angeordneter Sensoren 5 bis 8 zugegeben. Diese Sensoren können verschiedenartig ausgebildet sein. So können berührungslose Näherungsinitiatoren, Lichtschranken, gewichtsabhängige Impulsgeber oder anderweitige Schaltelemente Verwendung finden.

Anhand dieser Informationen ermittelt und speichert der Prozessrechner 4 die Position jeder auf den Transportbändern 3 bzw. den Abschnitten 3a bis 3d befindlichen Flasche sowie die Position des jeweiligen Pulkendes und die im Pulk befindliche Flaschenanzahl. Diese Information stellt der Prozessrechner 4 einer beliebigen Regelung (Maschinenregelung, Transportgeschwindigkeitsregelung usw.) zur Verfügung.

**Patentansprüche**

1. Vorrichtung zur Ermittlung des Befüllungsgrades von Pufferstrecken zwischen Gefässbehandlungsmaschinen zum Zwecke der Regelung der Durchsatzleistung von Maschinen und Transporteuren in einer Gefässbehandlungsanlage, wobei der Befüllungsgrad eines solchen Puffers anhand der Durchsatzleistung ermittelt wird, dadurch gekennzeichnet, dass die Gefässe und deren Bewegung im Bereich der Pufferstrecke abschnittweise erfasst und dabei sowohl die Durchsatzleistung der jeweiligen angrenzenden Behandlungsmaschinen sowie die Geschwindigkeit der Transportbänder der einzelnen Pufferzonen zu deren Durchsatzleistungskorrektur herangezogen werden und dabei die rechnerische Verfolgung der Gefässe mittels Prozessrechner erfolgt, wobei die Pufferabschnitte reihenweise angeordnet und unabhängig voneinander regelbar sind.

2. Vorrichtung nach Anspruch 1, dadurch gekennzeichnet, dass die rechnerische Ermittlung durch Sensoren (5–8) im Bereich des Puffers kontrolliert und korrigiert wird.

3. Vorrichtung nach Ansprüchen 1 und 2, dadurch gekennzeichnet, dass das Flaschenverfolgungsverfahren durch die Sensorenimpulse erfolgt und deren Durchsatzleistung anhand dieser Daten adaptiv selbsttätig verändert und optimiert wird.

4. Vorrichtung nach Anspruch 1, dadurch gekennzeichnet, dass bei einer willkürlich wählbaren Belegung der Puffer die Durchsatzleistung der zugeordneten Maschine der Durchsatzleistung der zugeordneten Leitmaschine anpassbar ist, andernfalls durch Über- oder Unterschreitung dieses Leitdurchsatzes die gewünschte Belegung der Puffer angestrebt wird, wobei die Leitmaschine beliebig wählbar ist.

5. Vorrichtung nach Anspruch 1, dadurch gekennzeichnet, dass die Leitmaschine der zu regelnden Maschine vorzugsweise die in Füllerrichtung nächstliegende Maschine und/oder Behandlungsgruppe ist.

6. Vorrichtung nach Anspruch 1, dadurch gekennzeichnet, dass bei mehreren gleichartigen parallel arbeitenden Maschinen vorhandene Leistungsredundanz bei Leistungsminderung von Maschinen dieser Gruppe ausnutzbar ist.

**Claims**

1. Device for determining the degree of filling of buffer zones between container processing machines for the purpose of adjusting the throughput capacity of machines and conveyors in a container processing plant, the degree of filling of such a buffer zone being determined with reference to the throughput capacity, characterised in that the containers and their displacement in the region of the buffer zone are detected in sections, and both the throughput capacity of the particular processing machines adjacent the individual buffer zones and the speed of the conveyor belts in the individual buffer zones are thereby used as a basis for adjusting their throughput capacity, and the computerised processing of the containers is thereby effected by means of microprocessors, the buffer zones being disposed in series and being adjustable independently of one another.

2. Device according to claim 1, characterised in that the computerised determination is controlled and monitored and adjusted by sensors (5–8) in the region of the buffer zone.

3. Device according to claims 1 and 2, characterised in that the bottle processing method is effected by the sensor pulses, and its throughput capacity is automatically adaptively changed and optimised with reference to these data.

4. Device according to claim 1, characterised in that, with a randomly selectable filling of the buffer zones, the throughput capacity of the associated machine is adaptable to the throughput capacity of the associated conveyor, otherwise the desired filling of the buffer zones is soughtafter by exceeding or not reaching this conveyor throughput the conveyor being optionally selectable.

5. Device according to claim 1, characterised in that the conveyor of the machine to be adjusted is preferably the machine and/or processing unit which is situated the nearest in the filling direction.

6. Device according to claim 1, characterised in that the redundant capacity, which exists when there are a plurality of similar machines operating in parallel, is utilisable in the event of a reduction in the capacity of machines of this unit.

**Revendications**

1. Dispositif pour déterminer le degré de remplissage d'intervalles tampon entre machines de manutention de récipients en vue de la régulation du débit de machines et de convoyeurs dans une installation de manutention de récipients, le degré de remplissage d'un tel tampon étant déterminé par le débit, caractérisé en ce que les récipients et leurs mouvements dans la région de l'intervalle tampon sont déterminés par sections, aussi bien le débit des machines de manutention respectivement voisines que la vitesse des bandes transporteuses des zones tampon individuelles étant utilisés pour la correction de leur débit et le suivi par ordinateur des récipients étant réalisé par un calculateur industriel, les sections tampon étant disposées en rangées et pouvant être réglées indépendamment les unes des autres.

2. Dispositif selon la revendication 1, caractérisé en ce que la détermination par ordinateur est contrôlée et corrigée par des capteurs (5–8) dans la région tampon.

3. Dispositif selon les revendications 1 et 2, caractérisé en ce que le processus de suivi de bouteilles est réalisé par les impulsions des capteurs et leur débit est modifié et optimalisé automatiquement et de façon adaptative au moyen de ces données.

4. Dispositif selon la revendication 1, caractérisé en ce que dans le cas où les tampons sont disposés aléatoirement au choix, le débit de la machine associée peut être adapté au débit de la machine directrice, sinon l'occupation désirée des tampons est recherchée en passant au-dessus ou en descendant au-dessous de ce débit directeur, la machine directrice pouvant être choisie de façon quelconque.

5. Dispositif selon la revendication 1, caractérisé en ce que la machine directrice de la machine à réguler est de préférence la machine et/ou le groupe de manutention qui est situé immédiatement à la suite dans le dispositif de remplissage.

6. Dispositif selon la revendication 1, caractérisé en ce que dans le cas de plusieurs machines fonctionnant en parallèle et de même type, on met à profit la redondance de puissance disponible par une réduction de la puissance de machines de ce groupe.

Pos.   jeden Gefäßes

Pos.   P.E.

Anz.   Fl.

M